Europäisches Patentamt

European Patent Office

Office européen des brevets

(11) Publication number: **0 274 661**
**B1**

(12) **EUROPEAN PATENT SPECIFICATION**

(45) Date of publication of patent specification: **06.02.91**

(21) Application number: **87118072.5**

(22) Date of filing: **07.12.87**

(51) Int. Cl.⁵: **A 47 C 3/30, F 16 B 21/16**

(54) A construction assembly.

(30) Priority: **13.12.86 DE 3642699**

(43) Date of publication of application:
**20.07.88 Bulletin 88/29**

(45) Publication of the grant of the patent:
**06.02.91 Bulletin 91/06**

(84) Designated Contracting States:
**DE ES FR GB IT**

(56) References cited:
**GB-A- 911 832**
**GB-A-2 159 402**

(73) Proprietor: **Stabilus GmbH**
**Wallersheimer Weg 100**
**D-5400 Koblenz-Neuendorf (DE)**

(72) Inventor: **Poertzgen, Gregor**
**Markenbildchenweg 32**
**D-5400 Koblenz (DE)**
Inventor: **Knopp, Axel**
**Tannenweg 11**
**D-5411 Eitelborn (DE)**

(74) Representative: **Weickmann, Heinrich, Dipl.-Ing.**
**et al**
**Patentanwälte Dipl.-Ing. H.Weickmann Dipl.-**
**Phys.Dr. K.Fincke Dipl.-Ing. F.A.Weickmann**
**Dipl.-Chem. B. Huber Dr.-Ing. H. Liska Dipl.-**
**Phys.Dr. J. Prechtel Postfach 860820**
**D-8000 München 86 (DE)**

Courier Press, Leamington Spa, England.

## Description

### Background of the Invention

There is frequently a need of axially fixing a pin member with respect to a wall member when the wall member has an opening and the pin member extends through this opening. For example, the wall member may be supported by axial support means of the pin member which engage one side face of the wall member. For preventing a separation of the wall member from the axial support means securing means are provided on the other side of the wall member. These securing means engage a peripheral groove of the pin member. Such a construction assembly is for example, but not exclusively, used in chair columns in which a lockable gas spring with a downwardly directed piston rod is guided in a guide tube and the lower end portion of the piston rod is to be connected to a bottom wall of the guide tube.

### Statement of the Prior Art

British Patent 1,239,729 shows a chair column of the above described type. In the known construction the securing means comprise a flat annular spring member and there may occur an axial play of the wall member between the axial support means of the piston rod member, on the one hand, and the annular spring member, on the other hand, due to manufacturing tolerances.

### Object of the Invention

It is an object of the present invention to provide securing means which avoid such an axial play. A further object is to provide securing means which can be easily mounted and released to and from the pin member, respectively. A further object is to provide securing means which have high securing reliability.

### Summary of the Invention

A construction assembly comprises a pin member having an axis and a circumferential surface, and further comprises a wall member having a first side face and a second side face and a wall member opening extending through the wall member from the first side face to the second side face. The pin member passes through the wall member opening. Axial support means are axially fixed with respect to the pin member and support the wall member on the first side face thereof. Securing means are provided on the pin member adjacent to the second side face of the wall member. These securing means include groove means in the circumferential surface of the pin member and a securing element cooperating with the groove means. The securing element comprises a base plate member having a first main surface adjacent to the second side face of the wall member, a second main surface remote from the second side face of the wall member and a base plate opening extending through the base plate member from the first main surface to the second main surface. The pin member passes through the base plate opening.

A plurality of spring tongues are integral with the base plate member. These spring tongues extend in substantially radially outward direction from the base plate member with respect to the axis and are bent radially inwards over the second main surface of the base plate member. The spring tongues have free ends adjacent to the circumferential surface of the pin member. These free ends of the spring tongues are engaged in the groove means.

In this construction the axial play can be eliminated by varying axial distance of the free ends of the spring tongues from the second main surface. As the spring tongues are integral with the base plate member one single securing element is used beside the groove means. This securing element can be readily mounted on the pin member by shifting the securing element from one end of the pin member in axial direction along the circumferential surface of the pin member until the free ends of the spring tongues snap into the groove means. A high securing reliability is obtained by the engagement of the spring tongues with their free ends into the groove means.

According to a preferred embodiment of the invention the free ends of the spring tongues are — when being engaged into the groove means — prestressed in axial direction towards the base plate member such that the base plate member urges the wall member against the axial support means. In this preferred embodiment axial play is reliably eliminated without preliminary adaptation of the spring tongues to the respective axial position of the groove means.

In order to provide a considerable radial elasticity of the spring tongues these spring tongues are bent — when being regarded in a plane containing said axis — along a substantially circular line and have a tail portion with the respective free end. This tail portion may be substantially parallel to the second main surface when the respective free end engages the groove means. Preferably the groove means comprise one peripheral groove having a bottom surface following a circle about said axis. In this case the free ends preferably have a curved edge engaging the bottom surface with the radius of curvature of said curved edge corresponding to the radius of the circle. It has been found that an embodiment with two spring tongues diametrically opposed to each other is sufficiently reliable, on the one hand, and can be easily mounted and dismounted, on the other hand.

In view of easily mounting the securing element it is proposed that the pin member has a conically tapered portion between the groove means and an end of the pin which is remote from the first side face. This conically tapered portion spreads the spring tongues when the securing element is shifted along the external face of the pin member until the free ends fall into the groove means.

According to a further embodiment the spring tongues engage the conically tapered portion of the pin already in a preassembled condition before the free ends of the spring tongues are engaged into the groove means. With other words: the free ends of the spring tongues define a circle which has a diameter larger than the minimum circle of the tapered portion. By this the abutment of the spring tongues against an axially directed end face of the pin member is avoided when the securing element is shifted onto the pin member.

In order to provide axial play even in operation of the construction assembly the axial prestress of the free ends should result in an axial force maintaining the wall member in engagement with the axial support means, and this axial force should be larger than expected operational axial forces acting in the sense of lifting the wall member from the axial support means.

In order to allow easy dismantling of the securing element the spring tongues are provided with spring tongue release means permitting the application of a spring tongue release tool.

In a chair column the pin member is defined by an external end portion of a piston rod of a gas spring unit. The gas spring unit is axially guided in a guide unit of a chair column with the piston rod extending downwards. The wall member is a piston rod carrying wall member of the guide unit.

The various features of novelty which characterize the invention are pointed out with particularity in the claims annexed to and forming a part of this disclosure. For a better understanding of the invention, its operating advantages and specific objects attained by its use, reference should be had to the accompanying drawings and descriptive matter in which there is illustrated and described a preferred embodiment of the invention.

Brief Description of the Drawings

The invention will be explained in greater detail hereinafter with reference to embodiments shown in the accompanying drawings, in which:

Figure 1 shows a chair column with a construction assembly of this invention;

Figure 2 shows a plan view onto the lower side of the securing element as seen in direction II of Figure 1;

Figure 3 shows a longitudinal section through the construction assembly of this invention according to line III—III of Figure 1; and

Figure 4 shows a longitudinal section through a further embodiment of a chair column including the construction assembly of this invention.

Description of the Preferred Embodiments

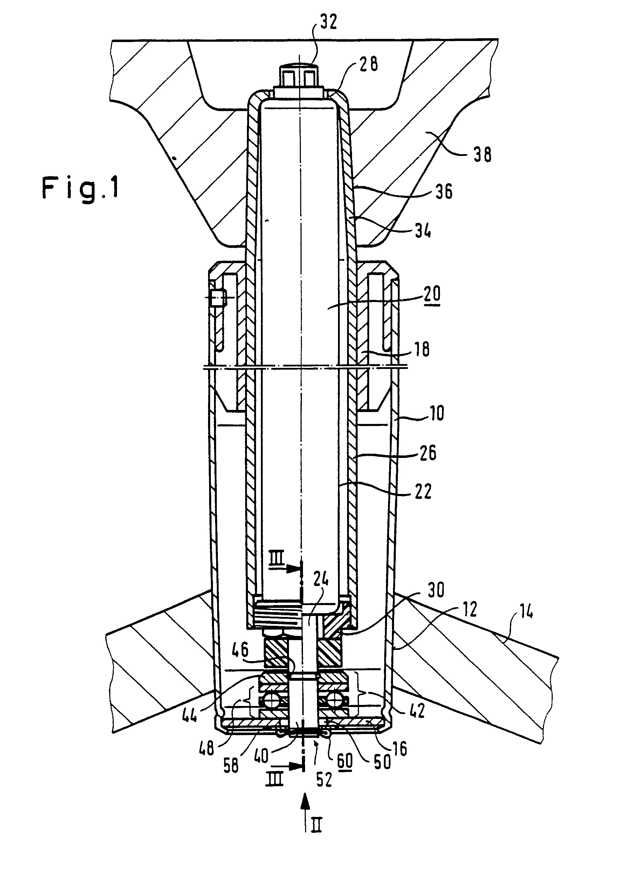

In Figure 1 there is shown a chair column. This chair column comprises a guide tube 10 which is conically tapered at 12 and is inserted with the conically tapered portion 12 into a foot member 14. The guide tube 10 is provided with a bottom wall 16. A guiding sleeve 18 is inserted into the upper end of the guide tube 10. A gas spring 20 comprises a cylinder 22 and a piston rod 24. The cylinder 22 is received by a protection tube 26.

The upper end of the cylinder 22 is in abutting engagement with an inwardly curled edge 28 of the upper end of the protection tube 26. An annular fastening member 30 is screwed into the lower end of the protection tube 26 and engages the lower end of the cylinder 22 such as to press the upper end of the cylinder 22 against the inwardly curled edge 28 of the protection tube 26. An operating button 32 protrudes beyond the upper end of the cylinder 22 and is operated for locking and unlocking the gas spring 20. The upper end portion 34 of the protection tube 26 is conically tapered and engages a conically tapered bore 36 of a seat member basis 38.

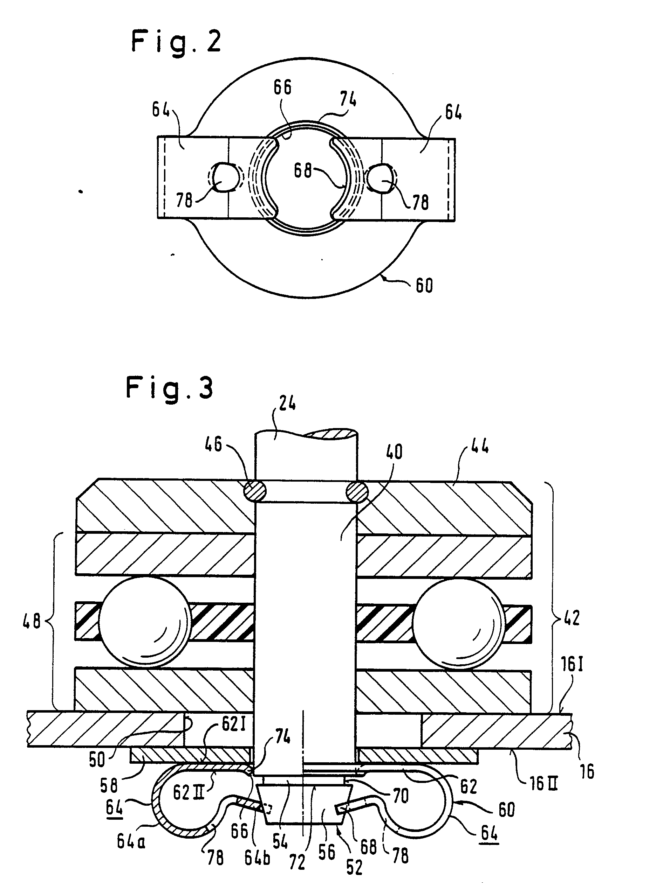

The lower end of the piston rod 24 is shaped as a pin 40. This pin 40 carries supporting means 42. These supporting means 42 comprise a supporting disc 44 axially fixed to the pin 40 by a spring clip member 46 engaging a groove of the pin 40. The supporting means 42 further comprise a thrust ball bearing 48, the lower thrust plate of which axially engages the bottom wall 16. A lower end portion of the pin 40 passes through an opening 50 of the bottom wall 16 and is secured at the lower end of the bottom wall 16 by securing means 52. This securing means 52 are shown in more detail in Figures 2 and 3. The lower end portion of the pin 40, which extends through the bottom plate 16, is provided with a circumferential groove 54 and a tapered portion 56. The bottom plate 16 has an upper side face 16I and a lower side face 16II. A disc 58 is in contact with the lower side face 16II. A securing element 60 comprises a base plate 62 with an upper main face 62I and a lower main face 62II. This base plate 62 is provided with spring tongues 64. The spring tongues 64 are integral with the base plate 62. The base plate 62 is provided with a base plate opening 66 which is passed by the pin 40. The tongues 64 are provided with circular sections 64a and tail sections 64b. The tail sections 64b are provided with concave edges 68. These concave edges 68 are adapted in radius to the radius of the bottom face 70 of the circumferential groove 54. The assembly as shown in Figure 3 is assembled as follows: the supporting disc 44 is axially fixed on the pin 40 by the spring clip member 46. The thrust ball bearing 48 is applied against the supporting disc 44. The pin 40 is passed through the bottom wall opening 50. The disc 58 is applied against the side face 16II of the bottom wall 16. The securing element 60 is applied with the upper main face 62I against the disc 58. Simultaneously the free ends or tail sections 64b come into loose engagement with their curved edges 68 against the tapered portion 56. Now the tail sections 64b are pressed upwards by a tube member surrounding the tapered end portion 56 of the pin 40. During upward movement of the tail sections 64b the circular sections 64a can escape elastically in radial outward direction. Finally, when the tail sections 64b arrive at the circumferential groove 54 the tail sections 64b snap into the circumferential groove 54 and the circumferential edges 68 engage the bottom face 70 of the circular groove 54. The tail sections 64b — when engaged into the circumferential groove 54 — are prestressed in axial direction with respect to the base plate 62, i.e. they are inclined to increase their distance from the lower main face 62II. So they act in axial direction onto the flank 72 of the circumferential groove 54. As a result thereof the base plate 62 presses the disc 58 and the thrust ball bearing 48 against the supporting disc 44. No free axial play exists between the pin 40 and the bottom plate 16.

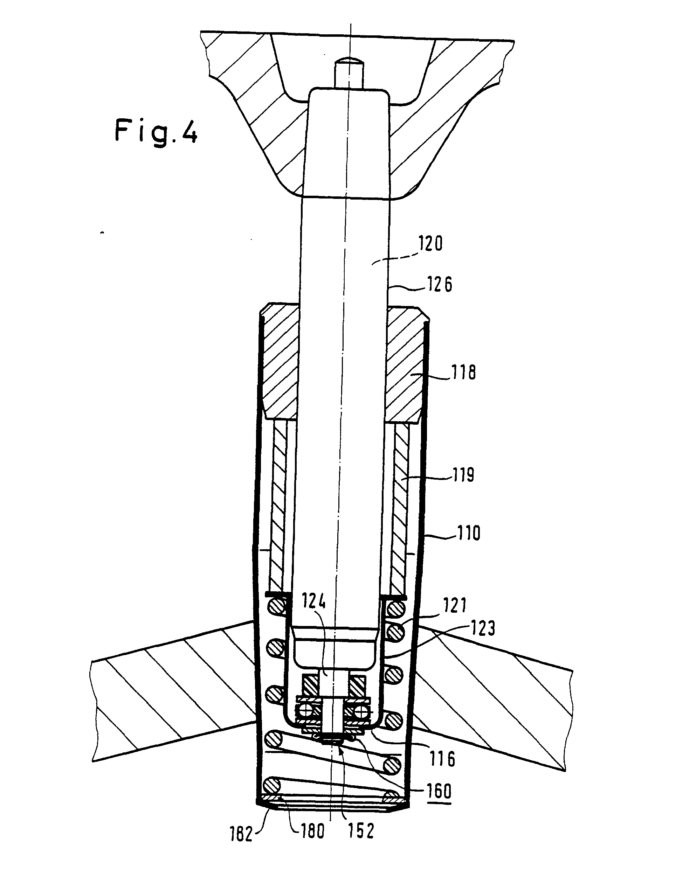

The securing element 60 comprises — as shown in more detail in Figure 2 — two spring tongues 64. The base plate opening 66 is provided with a downwardly projecting edge zone 74 as shown in Figures 2 and 3. The curved edges 68 of the spring tongues 64 are shown in more detail in Figure 2. The spring tongues 64 are provided with release openings 78. A release instrument can be introduced into the release openings 78 and, hereupon, spread so that the tail sections 64b are lifted out of the circumferential groove 54. In Figure 4 there is shown a gas spring 120 with a protection tube 126. The construction of the gas spring and the protection tube 26 is identical with the embodiment of Figure 1. The guiding sleeve 118 is provided with a distance sleeve 119. A helical compression spring 121 presses a pot-shaped member 123 against the lower end of the distance sleeve 119. The bottom wall 116 of the pot-shaped member 123 is secured to the pin 124 in the same way as shown in Figure 3. The helical compression spring 121 is supported at its lower end by a ring member 180 supported on an inwardly curled ring zone 182 of the guide tube 110. Due to the presence of the helical compression spring 121 the chair column is elastically cushioned. It is easily understandable that the securing element 160 of the securing means 152 can be easily mounted within the helical compression spring 121 by an auxiliary tube-shaped tool as described above. Dismantling of the securing element 160 can also be accomplished as described above.

It is to be noted that in both embodiments — as shown in Figures 1 and 4 — the piston rod 24 and 124, respectively, is connected with the guiding tube 10 and 110, respectively, without any noticeable play.

The disc 58 may be of antifriction material like polytetrafluorethylene in order to reduce frictional turning resistance when the pin 40, or the piston rod 24 as a total, is turned with respect to the bottom wall 16 and 116, respectively.

It is readily understandable that the disc 58 may also be avoided such that the base plate 62 directly engages the bottom wall 16. It is, however, preferable to provide the bottom wall opening 50 with a relatively large diameter as compared with the diameter of the pin 40 so as to permit to the piston rod 24 a certain radial play with respect to the bottom wall 16. The prestress acting onto the spring tongues 62 is such that even when lifting the chair column, no play occurs between the pin 40 and the bottom wall 16.

With other words: the force exerted by the prestress of the spring tongues 64 is larger than the weight of the guiding tube 10 and the weight of the foot member 14. The friction of the curved edges 68 with respect to the bottom face 70 is such that the free expansion of the spring tongues 64 is not inhibited.

It is to be noted that the freeness of axial play is independent of axial tolerances of the circumferential groove 54 with respect to the support plate 44, on the one hand, and of the sum of the thickness of the thrust ball bearing 48, the bottom wall 16, the disc 58 and the base plate 62, on the other hand.

While specific embodiments of the invention have been shown and described in detail to illustrate the application of the inventive principles, it will be understood that the invention may be embodied otherwise without departing from such principles.

The reference numerals in the claims are only used for facilitating the understanding and are by no means restrictive.

**Claims**

1. A construction assembly comprising a pin member (40) having an axis and a circumferential surface,

a wall member (16) having a first side face (16I) and a second side face (16II) and a wall member opening (50) extending through said wall member (16) from said first side face (16I) to said second side face (16II), said pin member (40) passing through said wall member opening (50),

axial support means (42) being axially fixed with respect to said pin member (40) and supporting said wall member (16) on the first side face (16I) thereof,

securing means (54, 60) being provided on said pin member (40) adjacent to the second side face (16II) of said wall member (16), said securing means (54, 60) including groove means (54) in the circumferential surface of said pin member (40) and a securing element (60) cooperating with said groove means (54),

characterized by:

said securing element (60) comprising a base plate member (62) having a first main surface (62I) adjacent to said second side face (16II) of said wall member (16), a second main surface (62II) remote from said second side face (16II) of said wall member (16) and a base plate opening (66) extending through said base plate member (62) from said first main surface (62I) to said second main surface (62II), said pin member (40) passing through said base plate opening (66),

a plurality of spring tongues (64) being integral with said base plate member (62), said spring tongues (64) extending in substantially radially outward direction from said base plate member (62) with respect to said axis and being bent radially inwards over said second main surface (62II) of said base plate member (62), said spring tongues (64) having free ends (64b) adjacent to said circumferential surface of said pin member (40), said free ends (64b) of said spring tongues (64) being engaged in said groove means (54).

2. A construction assembly as set forth in claim 1, said free ends (64b) of said spring tongues (64) being — when being engaged into said groove means (54) — prestressed in axial direction such that said base plate member (62) urges said wall member (16) against said axial supporting means (42).

3. A construction assembly as set forth in claim 1 or 2, said spring tongues (64) being bent — when being regarded in a plane containing said axis — along a substantially circular line and having a tail section (64b) with the respective free end.

4. A construction assembly as set forth in claim 3, said tail section (64b) being substantially parallel to said second main surface (62II) when the respective free end (64b) engages said groove means (54).

5. A construction assembly as set forth in one of claims 1 to 4, said groove means (54) comprising a groove (54) having a bottom face (70) following a circle about said axis, and said free ends (64b) having a curved edge (68) engaging said bottom face (70), the radius of curvature of said curved edge (68) corresponding to the radius of said circle.

6. A construction assembly as set forth in one of claims 1 to 5, said securing element (60) comprising two spring tongues (64) diametrically opposed to each other.

7. A construction assembly as set forth in one of claims 1 to 6, said pin member (40) having a conically tapered portion (56) between said groove means (54) and an end of said pin (40) which is remote from said first side face (16I).

8. A construction assembly as set forth in claim 7, said spring tongues (64) loosely engaging said conically tapered portion (56) of said pin (40) in a preassembled condition before said free ends (64b) of said spring tongues (64) are engaged into said groove means (54).

9. A construction assembly as set forth in one of claims 2 to 8, the axial prestress of said free ends (64b) resulting in an axial force maintaining said wall member (16) in engagement with said axial support means (42), said axial force being larger than expected operational axial forces acting in the sense of lifting said wall member (16) from said axial support means (42).

10. A construction assembly as set forth in one of claims 1 to 9, said spring tongues (64) being provided with spring tongue release means (78) permitting the application of a spring tongue release tool, said spring tongue release tool lifting said free ends (64b) in radial direction out of said groove means (54).

11. A construction assembly as set forth in one of claims 1 to 10, said pin member (40) being an external end portion of a piston rod (24) of a gas spring unit (22, 26), said gas spring unit (22, 26) being axially guided in a guide unit (10) of a chair column with the piston rod (24) extending downwards, said wall member (16) being a piston rod carrying wall member of said guide unit (10).

**Patentansprüche**

1. Konstruktionseinheit, umfassend
einen Stiftteil (40), welcher eine Achse und eine Umfangsfläche aufweist,
einen Wandteil (16), der eine erste Seitenfläche (16I) und eine zweite Seitenfläche (16II) sowie eine Wandteilöffnung (50) aufweist, welche sich durch den Wandteil (16) von der ersten Seitenfläche (16I) aus zu der zweiten Seitenfläche (16II) erstreckt, wobei der Stiftteil (40) die Wandteilöffnung (50) durchsetzt,
eine axiale Halteeinrichtung (42), die axial in bezug auf den Stiftteil (40) festgelegt ist und die den Wandteil (16) an dessen erster Seitenfläche (16I) hält,
Sicherungsmittel (54, 60), die an dem Stiftteil (40) in der Nähe der zweiten Seitenfläche (16II) des Wandteils (16) vorgesehen sind, wobei die Sicherungsmittel (54, 60) eine Nuteinrichtung (54) in der Umfangsoberfläche des Stiftteils (40) und ein mit der Nuteinrichtung (54) zusammenwirkendes Sicherungselement (60) umfassen, dadurch gekennzeichnet,
daß das Sicherungselement (60) einen Grundplattenteil (62) umfaßt, welcher eine zu der zweiten Seitenfläche (16II) des Wandteils (16) benachbarte, erste Hauptoberfläche (62I) aufweist, wobei eine zweite Hauptoberfläche (62II) von der zweiten Seitenfläche (16II) des Wandteils (16) abgekehrt ist und sich eine Grundplattenöffnung (66) durch den Grundplattenteil (62) von der ersten Hauptoberfläche (62I) zu der zweiten Hauptoberfläche (62II) erstreckt, wobei der Stiftteil (40) die Grundplattenöffnung (66) durchsetzt,
wobei eine Anzahl von Federzungen (64) einstückig mit dem Grundplattenteil (62) verbunden sind, wobei die Federzungen (64) sich in bezug auf die Achse im wesentlichen nach radial auswärts von dem Grundplattenteil (62) aus erstrecken und über der zweiten Hauptoberfläche (62II) des Grundplattenteils (62) nach radial einwärts gekrümmt sind, wobei die Federzungen (64) zu der Umfangsoberfläche des Stiftteils (40) benachbarte, freie Enden (64) aufweisen, wobei die freien Enden (64b) der Federzungen (64) mit der Nuteinrichtung (54) in Eingriff stehen.

2. Konstruktionseinheit nach Anspruch 1, wobei die freien Enden (64b) der Federzungen (64) so in axialer Richtung vorgespannt sind, daß der Grundplattenteil (62) bei in das Nutelement (54) eingreifenden Federzungen (64) den Wandteil (16) gegen die axiale Halteeinrichtung (42) drückt.

3. Konstruktionseinheit nach Anspruch 1 oder 2, wobei die Federzungen (64) in einer die Achse enthaltenden Ebene betrachtet, entlang einer im wesentlichen kreisförmigen Linie gekrümmt sind und einen Schwanzabschnitt (64b) mit dem jeweiligen freien Ende aufweisen.

4. Konstruktionseinheit nach Anspruch 3, wobei der Schwanzabschnitt (64b) im wesentlichen parallel zu der zweiten Hauptoberfläche (62II) ist, wenn das jeweilige freie Ende (64b) in die Nuteinrichtung (54) eingreift.

5. Konstruktionseinheit nach einem der Ansprüche 1—4, wobei die Nuteinrichtung (54) eine Nut (54) umfaßt, welche eine einen Kreis um die Achse bildende Bodenfläche (70) aufweist und daß die freien Enden (64b) eine abgerundete Ecke (68) besitzen, die mit der Grundfläche (70) zusammenwirkt, wobei die Radius der Rundung der abgerundeten Ecke (68) dem Radius des Kreises entspricht.

6. Konstruktionseinheit nach einem der Ansprüche 1—5, wobei das Sicherungselement (60) zwei zuneinander diametral gegenüberliegende Federzungen (64) umfaßt.

7. Konstruktionseinheit nach einem der Ansprüche 1—6, wobei der Stiftteil (40) einen konisch angephasten Abschnitt (56) zwischen der Nuteinrichtung (54) und dem Ende des Stifts (40) aufweist, welches von der ersten Seitenfläche (16I) abgewandt ist.

8. Konstruktionseinheit nach Anspruch 7, wobei die Federzungen (64) in einem vormontierten Zustand, bevor die freien Enden (64b) der Federzungen (64) in die Nuteinrichtung (54) eingreifen, lose an dem konisch angephasten Abschnitt (56) des Stiftes (40) anliegen.

9. Konstruktionseinheit nach einem der Ansprüche 2—8, wobei die axiale Vorspannung der freien Enden (64b) zu einer axialen Kraft führt, die den Wandteil (16) in Anlage mit der axialen Halteeinrichtung (42) hält, wobei die axiale Kraft größer als die erwartete axiale Betriebskraft ist, die in Richtung des Anhebens des Wandteils (16) von der axialen Halteeinrichtung (42) wirkt.

10. Konstruktionseinheit nach einem der Ansprüche 1—9, wobei die Federzungen (64) mit Federzungen-Lösemitteln (78) versehen sind, die das Ansetzen eines Federzungen-Lösewerkzeuges gestatten, wobei das Federzungen-Lösewerkzeug die freien Enden (64b) in radialer Richtung aus der Nuteinrichtung (54) heraushebt.

11. Konstruktionseinheit nach einem der Ansprüche 1—10, wobei der Stiftteil (40) ein äußerer Endabschnitt einer Kolbenstange (24) einer Gasfedereinheit (22, 26) ist, wobei die Gasfedereinheit (22, 26) axial in einer Führungseinheit (10) einer Stuhlsäule mit der sich nach unten erstreckenden Kolbenstange (24) geführt ist, wobei der Wandteil (16) ein Kolbenstangentragwandteil der Führungseinheit (10) ist.

**Revendications**

1. Dispositif d'assemblage comprenant un organe formant cheville (40) ayant un axe et une surface circonférentielle,
un organe formant paroi (16) présentant une première face (16I) et une deuxième face (16II) et une ouverture de l'organe formant paroi (50) s'étendant à travers ledit organe formant paroi (16) depuis ladite première face (16I) jusqu'à ladite deuxième face (16II), ledit organe formant cheville (40) passant à travers ladite ouverture de l'organe formant paroi (50),

des moyens formant support axial (42) étant fixés dans un sens axial par rapport audit organe formant cheville (40) et supportant ledit organe formant paroi (16) sur ladite première face (16I) de ce dernier,
des moyens de fixation (54, 60) étant prévus sur ledit organe formant cheville (40) adjacents à ladite deuxième face (16II) dudit organe formant paroi (16), lesdits moyens de fixation (54, 60) comprenant un moyen formant rainure (54) ménagé dans la surface circonférentielle dudit organe formant cheville (40) et un élément de fixation (60) agissant avec ledit moyen formant rainure (54),
caractérisé par:
ledit élément de fixation (60) comprenant un organe formant plaque d'appui (62) ayant une première surface principale (62I) adjacente à ladite deuxième face (16II) dudit organe formant paroi (16), une deuxième surface principale (62II) éloignée de ladite deuxième face (16II) dudit organe formant paroi (16) et une ouverture de la plaque d'appui (66) s'étendant à travers ledit organe formant plaque d'appui (62) depuis ladite première surface principale (62I) jusqu'à ladite deuxième surface principale (62II), ledit organe formant cheville (40) passant à travers ladite ouverture de la plaque d'appui (66),
une pluralité de languettes élastiques (64) étant solidaires dudit organe formant plaque d'appui (62), lesdites languettes élastiques (64) s'étendant dans un sens radial vers l'extérieur depuis ledit organe formant plaque d'appui (62) par rapport audit axe et étant recourbées dans une sens radial vers l'intérieur au-dessus de ladite deuxième surface principale (62II) dudit organe formant plaque d'appui (62), lesdites languettes élastiques (64) présentant des extrémités libres (64b) adjacentes à ladite surface circonférentielle dudit organe formant cheville (40), lesdites extrémités libres (64b) desdites languettes élastiques (64) s'engageant dans ledit moyen formant rainure (54).

2. Dispositif d'assemblage selon la revendication 1, caractérisé en ce que lesdites extrémités libres (64b) desdites languettes élastiques (64) sont — lorsqu'elles s'engagent dans ledit moyen formant rainure (54) — précontraintes dans un sens axial de sorte que ledit organe formant plaque d'appui (62) pousse ledit organe formant paroi (16) contre lesdits moyens formant support axial (42).

3. Dispositif d'assemblage selon la revendication 1 ou 2, caractérisé en ce que lesdites languettes élastiques (64) sont recourbées — lorsqu'on les considère dans un plan contenant ledit axe — le long d'une ligne essentiellement circulaire et présentant une partie formant queue (64b) avec l'extrémité libre respective.

4. Dispositif d'assemblage selon la revendication 3, caractérisé en ce que ladite partie formant queue (64b) est essentiellement parallèle à ladite deuxième surface principale (62II) lorsque l'extrémité libre respective (64b) s'engage dans ledit moyen formant rainure (54).

5. Dispositif d'assemblage selon l'une quelconque des revendications 1 à 4, caractérisé en ce que ledit moyen formant rainure (54) comprend und rainure (54) présentant une face inférieure (70) suivant un cercle autour dudit axe, et en ce que lesdites extrémités libres (64b) présentant un bord recourbé (68) se mettent en prise avec ladite face inférieure (70), le rayon de courbure dudit bord recourbé (68) correspondant au rayon dudit cercle.

6. Dispositif d'assemblage selon l'une quelconque des revendications 1 à 5, caractérisé en ce que ledit élément de fixation (60) comprend deux languettes élastiques (64) diamétralement opposées.

7. Dispositif d'assemblage selon l'une quelconque des revendications 1 à 6, ledit organe formant cheville (40) présentant une partie conique (56) entre ledit moyen formant rainure (54) et une extrémité de ladite cheville (40) qui et éloignée de ladite première face (16l).

8. Dispositif d'assemblage selon la revendication 7, caractérisé en ce que lesdites languettes élastiques (64) sont placées de manière mobile en prise avec ladite partie conique (56) de ladite cheville (40) dans un état préassemblé avant que lesdites extrémités libres (64b) desdites languettes élastiques (64) ne s'engagent dans ledit moyen formant rainure (54).

9. Dispositif d'assemblage selon l'une quelconque des revendications 2 à 8, caractérisé en ce que la précontrainte axiale desdites extrémités libres (64b) se traduit par une force axiale maintenant ledit organe formant paroi (16) en prise avec lesdits moyens formant support axial (42), ladite force axiale étant supérieure aux forces axiales opérationnelles prévues agissant de manière à écarter ledit organe formant paroi (16) desdits moyens formant support axial (42).

10. Dispositif d'assemblage selon l'une quelconque des revendications 1 à 9, caractérisé en ce que lesdites languettes élastiques (64) sont pourvues de moyens (78) pour libérer les languettes élastiques permettant l'application d'un outil prévu pour libérer les languettes élastiques soulevant lesdites extrémités libres (64b) dans un sens radial pour les retirer dudit moyen formant rainure (54).

11. Dispositif d'assemblage selon l'une quelconque des revendications 1 à 10, caractérisé en ce que ledit organe formant cheville (40) est une partie d'extrémité externe d'un tige de piston (24) d'un élément à ressort pneumatique (22, 26), ledit élément à ressort pneumatique (22, 26) étant guidé dans le sens axial dans un élément guide (10) d'un montant de siège avec la tige de piston (24) s'étendant vers le bas, ledit organe formant paroi (16) étant un organe formant paroi dudit élément guide (10) supportant la tige de piston.

Fig.1

# Fig. 2

# Fig. 3

Fig.4